# EUROPEAN PATENT SPECIFICATION

(11) **EP 4 332 810 B1**
(45) Date of publication and mention of the grant of the patent: **20.05.2026**
(21) Application number: 22831474.6
(22) Date of filing: 16.05.2022
(51) Int. Cl.: G06F 21/53, G06F 21/60, G06F 9/455, G06F 21/57, G06F 21/72

(54) **METHOD FOR REALIZING VIRTUALIZED TRUSTED PLATFORM MODULE, AND SECURE PROCESSOR AND STORAGE MEDIUM**
VERFAHREN ZUR HERSTELLUNG EINES VIRTUALISIERTEN SICHEREN PLATTFORMMODULS SOWIE SICHERER PROZESSOR UND SPEICHERMEDIUM
PROCÉDÉ DE RÉALISATION D'UN MODULE DE PLATEFORME DE CONFIANCE VIRTUALISÉE, ET PROCESSEUR SÉCURISÉ ET SUPPORT DE STOCKAGE

(30) Priority: 28.06.2021 CN 202110727073
(43) Date of publication of application: 06.03.2024
(73) Proprietor: Hygon Information Technology Co., Ltd., Tianjin 300392 (CN)
(72) Inventor: CHEN, Shan, Tianjin 300392 (CN); YING, Zhiwei, Tianjin 300392 (CN)
(74) Representative: Regimbeau
(86) International application number: PCT/CN2022/092981
(87) International publication number: WO 2023/273647

(56) References cited:
- CN-A- 103 995 732
- CN-A- 105 956 465
- CN-A- 109 858 265
- CN-A- 112 241 306
- CN-A- 113 485 785
- US-A1- 2010 115 512
- US-A1- 2017 075 717
- US-A1- 2019 155 728

## Description

### CROSS-REFERENCE TO RELATED APPLICATION

This application is a National Phase Entry of International Application No. PCT/CN2022/092981 filed on May 16, 2022. The present application claims priority to Chinese Patent Application No. 202110727073.0 filed on June 28, 2021.

### TECHNICAL FIELD

Embodiments of the present disclosure relate to a method for implementing a virtualized trusted platform module, a secure processor, and a storage medium.

### BACKGROUND

Trusted Platform Module (TPM) is a trusted computing standard proposed by Trusted Computing Group (TCG), which realizes the trust root required for trusted computing. TPM is usually a special module in a system, which has high security. The functions provided by TPM can only be invoked by the outside through a defined command interface, and the internal operation of TPM cannot be affected. The common functions provided by TPM include password generation and storage, password operation, identity authentication and trusted report, etc. At present, TPM is widely used in a non-virtualized physical host, but rarely used in a virtual machine (VM) on the cloud. A TPM for VM may be called a virtualized trusted platform module (vTPM), and several key problems that vTPM needs to solve include:
(1) The expansibility requirements of vTPM and its own security problems

In the cloud environment, the VM in a physical host may be dynamically increased or decreased, and the number of vTPM needs to be increased or decreased accordingly. In addition, VM accessing to vTPM needs to ensure the security of access path and the security of vTPM.
(2) Different from the physical host, VM may have requirements of migration, and migrating VM requires migrating the corresponding vTPM at the same time, and the whole migration process needs to be secure;
(3) Like TPM, vTPM can be used to authenticate the identity of VM. vTPM needs to be bound to VM, and this binding is best based on a unchangeable security mechanism, rather than trust in the platform.
US2017/075717A1 discloses a virtual trusted platform module function implementation method.
CN105956465A discloses a method for constructing virtual trusted platform based on VTPM.
US2019/155728A1 discloses a secure management of operations on protected virtual machines.

### SUMMARY

It is an object of the present invention to provide a method for implementing a virtualized trusted platform module, a secure processor, and a storage medium. The object is achieved by the features of the respective independent claims. Further embodiments are defined in the corresponding dependent claims.

### BRIEF DESCRIPTION OF DRAWINGS

In order to more clearly illustrate the embodiments of the present disclosure, the drawings that need to be used in the embodiments will be briefly described in the following. Apparently, the drawings in the following description are only some embodiments of the present disclosure. For those skilled in the art, other drawings can also be obtained based on these drawings without any inventive work.
FIG. 1 is a schematic diagram of a network architecture to which at least one embodiment of the present disclosure can be applied;
FIG. 2 is a flowchart of a method for implementing a virtualized trusted platform module provided by at least one embodiment of the present disclosure;
FIG. 3 is a schematic diagram of a communication method between a virtual machine and a virtualized trusted platform module provided by at least one embodiment of the present disclosure;
FIG. 4 is a flowchart of another method for implementing a virtualized trusted platform module provided by at least one embodiment of the present disclosure;
FIG. 5 is a schematic diagram of an architecture of a virtual machine-oriented virtualized trusted platform module on the cloud service side, provided by at least one embodiment of the present disclosure;
FIG. 6 is a schematic diagram of the interaction among a user, a cloud platform and a secure processor when creating a virtual machine, provided by at least one embodiment of the present disclosure;
FIG. 7 is a schematic diagram of the interaction among a user, a cloud platform and a secure processor when a virtual machine is turned off or hibernated, provided by at least one embodiment of the present disclosure; and
FIG. 8 is a schematic diagram of the interaction among a source secure processor, a destination secure processor and a cloud platform during virtual machine migration, provided by at least one embodiment of the present disclosure.

### DETAILED DESCRIPTION

The embodiments of the present disclosure are described in detail below in conjunction with the drawings.

It should be apparent that the embodiments described herein are just a part but not all of the embodiments of the present disclosure. Based on the embodiments of the present disclosure, those skilled in the art can obtain other embodiment(s), without any inventive work, which should be within the scope of the present disclosure.

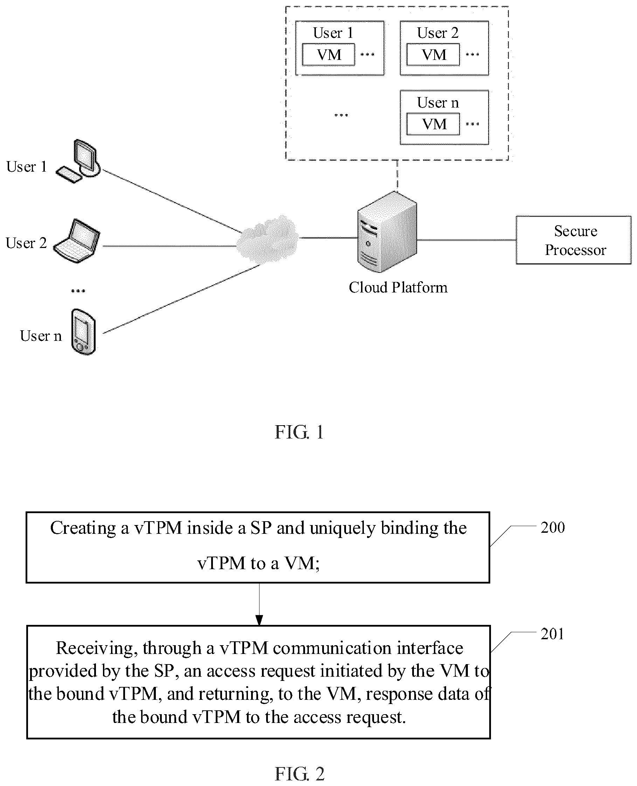

First, a network architecture to which the embodiments of the present disclosure can be applied is introduced. Referring to FIG. 1, the network architecture includes a plurality of terminals, a cloud platform and a secure processor (SP). For example, the terminal may be a user-side electronic device such as a desktop computer, a notebook computer or a mobile phone, which is connected with the cloud platform through a wireless or wired network, and users can log in to the cloud platform by using the terminal and request the cloud platform to provide services for them. A user's own VM can be created for each user on the cloud platform, and user's corresponding applications can be deployed on the VM to provide services for the user. The SP is connected with the cloud platform and is a specially set processor responsible for handling the security-related operations of the VM, and the SP and the cloud platform may be deployed on the same physical host or located in different hosts.

In the following, the technical solutions of the present disclosure will be introduced in detail through various embodiments, all of which are applicable to the above-mentioned network architecture.

At least one embodiment of the present disclosure provides a method for implementing virtualized trusted platform module, which can be executed by a virtualized trusted platform module implementation apparatus implemented by software and/or hardware, and the apparatus can be integrated in the SP. Referring to FIG. 2, the method specifically includes the following steps 200-201.

Step 200: creating a vTPM inside a SP and uniquely binding the vTPM to a VM.

In this step, a unique vTPM may be created inside the SP for each VM on the cloud platform, that is, create as many vTPMs as there are VMs, and bind a created vTPM with a unique corresponding VM on the cloud platform.

In practical application, considering the security of VMs, the VMs should be managed by the SP, and the SP will create and maintain a unique corresponding virtual machine security block (VMSB) for each VM. The VMSB is a data structure created for the VM in the SP to manage and support the operation of the VM. Therefore, in this case, the unique binding between the vTPM and the VM can be indirectly completed through the binding between the vTPM and the VMSB which is unique to the VM. In this way, the binding between the vTPM and the VM will not depend on the cloud platform, which can prevent the cloud platform from migrating a vTPM instance of one VM to other VMs at any time. Specifically, creating a vTPM inside a SP and uniquely binding the vTPM to a VM may include: creating a vTPM instance inside the SP and allocating a resource for the vTPM instance; and binding the created vTPM instance to a VMSB uniquely corresponding to the VM.

For example, the vTPM instance may initialize a default state, or a vTPM instance data file may be imported from a terminal through a cloud platform, and the specific state may be restored according to the imported file. The specific mode may be determined according to a configuration instruction sent by the terminal via the cloud platform. In addition, the resource allocated for the vTPM instance may include volatile storage space, non-volatile storage space, etc.

Usually, when creating a VM on the cloud platform, the SP will create a VMSB for the VM inside the SP, for example, creating a vTPM instance inside the SP includes creating the vTPM instance inside the SP when creating the VM. For example, the vTPM instance may also be created at other times after the creation of the VM and its corresponding VMSB, which is not specifically limited.

Step 201: receiving, through a vTPM communication interface provided by the SP, an access request initiated by the VM to the bound vTPM, and returning, to the VM, response data of the bound vTPM to the access request.

In this step, SP hardware is designed to support multiple vTPM communication interfaces, and one vTPM communication interface is allocated when creating one vTPM. The interface type may be Command Response Buffer (CRB) type, which is one of two common interface types of TPM. The VM performs data interaction with the bound vTPM in a request-response process through the vTPM communication interface allocated by the SP for the bound vTPM. Specifically, the step 201 may include: reading the access request, stored in an encrypted memory of the VM, initiated by the VM to the bound vTPM; writing the response data of the bound vTPM to the access request into the encrypted memory of the VM for the VM to read, in which the access request and the response data of the access request conform to a communication interface format of the vTPM provided by the SP.

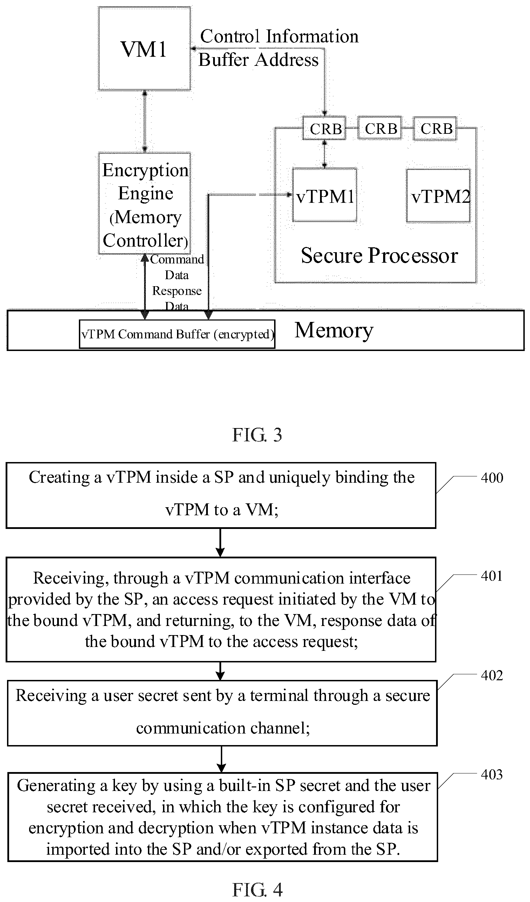

For example, referring to FIG. 3, VM1 sends an access request to the bound vTPM1, and the access request includes vTPM1 command data. An encryption engine (i.e., a memory controller) encrypts the access request and buffers the access request in an encrypted memory of the VM1, and returns a buffer address 1 of the access request to the VM1. The VM1 informs the vTPM1 in the SP of control information carrying the buffer address 1, the vTPM1 responds by reading the access request from a corresponding location in the memory according to the received buffer address 1, then encrypts the vTPM1 response data and buffers the vTPM1 response data in the encrypted memory of the VM1, and returns a buffer address 2 of the response data to the VM1. The VM1 reads the response data from the buffer address 2 in the encrypted memory of the VM1 through the encryption engine.

Because the memory of the VM is encrypted, only the VM itself and the SP can access the memory, and the SP always uses a key of the VM to access the memory, so it can be ensured that only the specified VM can use its own vTPM. The command data of the VM accessing the vTPM is encrypted, and the platform outside the VM is invisible, which ensures the security of access.

In the embodiments of the present disclosure, the VM directly accesses the vTPM in the SP through the designed vTPM communication interface, which eliminates the need for virtual machine manager routing, greatly reduces the attack plane, and realizes the binding between the vTPM and the VM. Non-VM user, even a platform administrator, has no right to migrate the vTPM to other VMs, thus effectively improving the security of the vTPM.

For example, on the basis of the above-mentioned embodiment, the import/export of the vTPM instance data is further limited to better improve the security of the vTPM. Referring to FIG. 4, the method for implementing a virtualized trusted platform module provided by the embodiments of the present disclosure includes the following steps 400-403.

Step 400: creating a vTPM inside a SP and uniquely binding the vTPM to a VM.

This step is the same as the above-mentioned step 200, and will not be described here.

Step 401: receiving, through a vTPM communication interface provided by the SP, an access request initiated by the VM to the bound vTPM, and returning, to the VM, response data of the bound vTPM to the access request.

This step is the same as the above-mentioned step 201, and will not be described here.

Step 402: receiving a user secret sent by a terminal through a secure communication channel.

In this step, a secure communication channel may be established among the terminal, the cloud platform and the SP in advance, and then a user secret of a user sent by the terminal can be received based on the secure communication channel. The establishment of the secure communication channel is not detailed here.

Step 403: generating a key by using a built-in SP secret and the user secret received, in which the key is configured for encryption and decryption when vTPM instance data is imported into the SP and/or exported from the SP.

Generally, creating vTPM instance and importing vTPM instance data are embedded in the step of creating VM, and then the vTPM instance data is imported as needed after creating the vTPM instance.

In the above-mentioned steps 402 and 403, the terminal corresponds to the user side. In the case where multiple users exist, each user has his own VM on the cloud platform, and each VM has a unique bound vTPM. The user secret sent by the user through the terminal is only used for encryption and decryption when the VTPM instance data bound by the user's own VM is imported into the SP and/or exported from the SP. However, only one built-in SP secret exists in the SP, which is the same for all vTPMs. Obviously, the encryption and decryption keys used when the vTPM instance data between different users is imported into the SP and/or exported from the SP are different due to different user secrets. The owner of the user secret is the user and the owner of the SP secret is the SP, so make sure that the vTPM instance can only run inside the SP and be bound to the user's VM.

It should be noted that the above-mentioned steps 402 and 403 only need to be executed after step 400, for example, the steps 402 and 403 can also be executed after step 400 and before step 401. FIG. 4 is only a specific example given for convenience.

In the embodiments of the present disclosure, the derived vTPM instance data is encrypted by using a key jointly derived from the user secret provided by the user and the SP secret built in the SP, thus ensuring that the vTPM instance can only be decrypted and recovered in the SP, and ensuring the security of confidential information in the vTPM.

As an embodiment, the key generated according to the user secret and SP secret, as well as the vTPM instance data bound to the user's VM, are both stored in a nonvolatile memory of the vTPM bound to the user's VM.

Optionally, after the vTPM instance is created inside the SP, the method provided by the embodiment of the present disclosure further includes: receiving the vTPM instance data imported by the terminal through the secure communication channel; decrypting the received vTPM instance data using the key generated in step 403; encrypting the received vTPM instance data with the key generated in step 403 when shutting down or hibernating theVM, or after restarting a host where the VM is located, and exporting the encrypted vTPM instance data to the terminal through the secure communication channel.

In specific implementation, the user can control the cloud platform to shut down or hibernate the VM through the terminal. At this time, it is necessary to export the instance data of the vTPM to which the VM of the user is bound, and the encryption of the instance data also uses the key generated according to the user secret of the user and SP secret. After the host where the SP is located is restarted, the user can export the instance data, stored in the nonvolatile memory, of the vTPM bound by the user's VM from the SP through the terminal via the cloud platform.

Optionally, after creating the vTPM instance inside the SP, the method provided by the embodiments of the present disclosure further includes encrypting, when the VM is migrated, the bound vTPM instance data, and sending the bound vTPM instance data to a destination SP.

In the above-mentioned optional methods, when the VM is shut down, hibernated, or migrated and when all the state and instance data corresponding to the vTPM need to be encrypted and exported, the encryption key is owned by the SP instead of the cloud platform operation and maintenance, which can prevent the security risks brought by the cloud platform being a public platform.

It should be noted that in the above-mentioned embodiments, the encryption and decryption of importing the vTPM instance data to the SP and/or exporting the vTPM instance data from the SP, the encryption and decryption of memory data when the VM interacts with the SP, and the encryption and decryption of the vTPM instance data migrated together when the VM is migrated are completely independent of each other, so the encryption methods (such as keys) adopted may also be different.

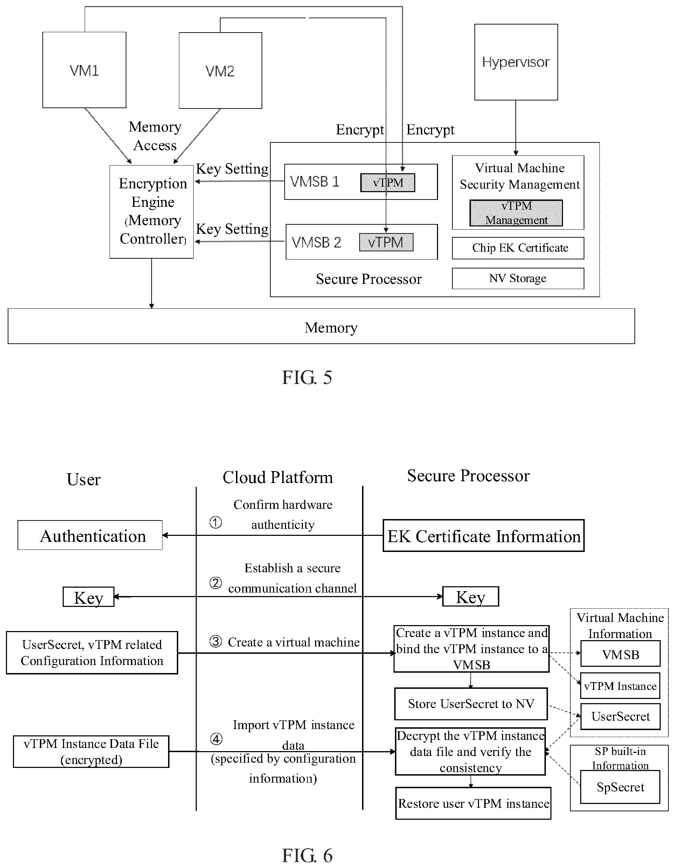

The technical solutions provided by the embodiments of the present disclosure will be described in detail with an example. In this example, a VM-oriented vTPM architecture on the cloud service side (including a cloud platform and a SP), as shown in FIG. 5, includes at least one VM (taking a VM1 and a VM2 as examples in the figure), an encryption engine, a VM memory, a SP and a hypervisor. The hypervisor is a virtual machine manager, which is used to manage the SP through a virtual machine security management module in the SP. The SP includes a virtual machine security management module, VMSB uniquely corresponding to each VM and VTPM bound to each VMSB, a chip EK certificate and a non-volatile (NV) memory. For example, the virtual machine security management module in the SP includes a vTPM manager, which is used to provide functions such as creating a vTPM instance, importing vTPM instance data, exporting vTPM instance data, and destroying a vTPM instance. Specifically, the example includes the following steps.

### 1. Creating a VM

As shown in FIG. 6, the process of implementing a vTPM based on creating a VM includes the following steps.

First, before the VM is created, the user terminal acquires the chip endorsement key (EK) certificate information of the SP from the SP through the cloud platform for authentication, so as to confirm the authenticity of the hardware, and the hardware supports secure virtualization and the vTPM.

Then, the user terminal and the SP determine the relevant keys needed for secure communication between the two parties through key negotiation or asymmetric encryption and decryption through the cloud platform, and the two parties establish a secure and confidential communication channel.

Next, the cloud platform creates the user's VM. In addition to the existing related data needed to create a VM, the user terminal will further send a UserSecret and vTPM related configuration information (such as whether the vTPM instance data file and the characteristic value of the file are needed) to the SP securely through the secure communication channel via the cloud platform. The SP internally creates a VMSB for managing and supporting the VM, and at the same time creates a vTPM instance and allocates needed resources. The SP binds the relevant information of the vTPM instance to the VMSB, thus binding the vTPM to the VM, and the UserSecret will be stored in a nonvolatile memory of the vTPM to ensure that it will not be lost when the system is powered down. According to the related configuration information of the vTPM sent by the user terminal, the SP can initialize the vTPM instance to a default state, or use the vTPM instance data file transmitted by the user terminal to restore the specific state of the vTPM instance, and the vTPM instance data file is decrypted by a key jointly derived from the UserSecret and a built-in SP secret SpSecret.

### 2. Shutting down and hibernating the VM

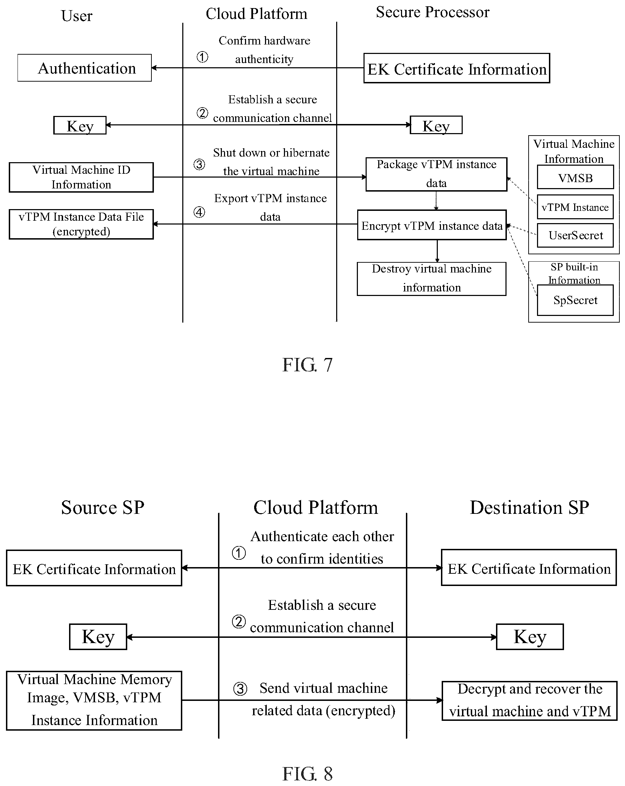

After the VM is shut down or hibernated, the VMSB in the SP will be completely destroyed, and the vTPM instance will also be destroyed. Therefore, it is necessary to export the vTPM instance data to a file so that it can be imported when the VM is restarted on the same or different physical hosts, and the process of VM restart is the same as that of VM creation. As shown in FIG. 7, it is similar to creating a VM.

First, before shutting down or hibernating the VM, the user terminal acquires the chip endorsement key (EK) certificate information of the SP from the SP through the cloud platform for authentication, so as to confirm the authenticity of the hardware, and the hardware supports secure virtualization and the vTPM.

Then, the user terminal and the SP determine the relevant keys needed for secure communication between the two parties through key negotiation or asymmetric encryption and decryption through the cloud platform, and the two parties establish a secure and confidential communication channel.

Next, the user terminal sends the user's own VM identification information to the cloud platform to control the cloud platform to shut down or hibernate the corresponding VM. The SP packages the corresponding vTPM instance data bound to the VM, encrypts the packaged data and protects the consistency of the packaged data with the key jointly derived from the user's UserSecret and the SpSecret built in SP, and then exports the packaged data to the user terminal, thus ensuring that the exported vTPM instance data can only be recovered in the SP specified by the user. The SpSecret is known to all the SP internally, but unknown to the SP externally, so the confidential information in the vTPM data file cannot be decrypted externally. Furthermore, the VM information of the user destroyed by the SP includes the VMSB, the vTPM instance corresponding to the user's VM and the UserSecret of the user.

### 3. Restarting the physical host after power failure

Like the physical TPM chip, the SP provides a nonvolatile memory for the vTPM, and stores the UserSecret information required for encrypting the vTPM instance data files in the nonvolatile memory. When the VM is destroyed abnormally due to unexpected events such as a power failure of the physical host during operation, just like when the VM is shut down and hibernated, the user can still export the vTPM instance data stored in the non-volatile memory from the SP after the host is restarted, and the data encryption still uses the key jointly derived by the UserSecret and the SpSecret. The exported vTPM instance data file is imported to the created vTPM instance again in the subsequent VM creation.

### 4. Migrating the VM

The migration of VM must be carried out between platforms that also support VM. As shown in FIG. 8, first, a source platform SP and a destination platform SP (the target SP in the figure) will authenticate each other, and after the authentication passes, the relevant key needed for secure communication will be created through key negotiation. Then, the source platform SP encrypts the VM memory image, some information in VMSB and bound vTPM instance information (including vTPM status, RAM volatile data, NV data, UserSecret, etc.) and sends them to the destination platform SP securely, and the destination platform SP decrypts them and recovers them completely. The encryption and decryption of the vTPM instance information and the binding between the vTPM and the VM are guaranteed by SP, and cannot be tampered with or destroyed by the cloud platform.

The EK certificate of the TPM ensures the authenticity of the manufacturer or owner of TPM device. Because the trust root of the vTPM is in the hands of the cloud platform, the cloud platform is fully capable of migrating the vTPM instance to any form of vTPM implementation, even software simulator. Therefore, neither the owner nor the manufacturer of the vTPM can issue EK certificates for the vTPM.

Therefore, in some embodiments of the present disclosure, a generation solution of an endorsement key certificate of the vTPM is added. Specifically, the method for implementing a vTPM provided by the embodiments of the present disclosure includes, in addition to the above-mentioned steps 400-403, generating an endorsement key for the vTPM; and signing the generated endorsement key with a chip endorsement key built in the SP, and generating an endorsement key certificate of the vTPM.

The instance information of the vTPM is bound to the VM, and migrated with the VM together with the VMSB. The VM can only be migrated between platforms that also support secure virtualization and are authenticated by the SP, so the vTPM instance will only be migrated between the same SP. In addition, in the process of exporting and importing the instance data of the vTPM, the data are all encrypted and decrypted by the SP, and the key is jointly derived from the UserSecret provided by the user and the built-in SpSecret of the SP, so the confidential information of the vTPM is completely invisible outside the SP and can only be decrypted in the SP specified by the user. The vTPM instance can only run in the SP, and it is always bound to the user's VM. The confidential information inside the instance is invisible outside the SP, which meets the essential requirement of proving the authenticity of users or manufacturers by the EK. Therefore, when creating the vTPM instance, SP can generate the EK for the vTPM and use the built-in chip EK (CEK for short) to sign the EK to generate an EK certificate, and the validity of the EK certificate can be proved by the CEK certificate. In addition, when using the vTPM, users may also call a standard TPM command to generate the EK and issue the EK certificate for the EK externally.

In the embodiments of the present disclosure, by binding the vTPM to the VM and ensuring that the vTPM instance data can only be decrypted in the SP hardware specified by the user, the basic conditions required for issuing the EK certificate are met. The SP manufacturer EK built in the vTPM is realized through the chip EK built into the SP, and users are also allowed to generate their own EK.

In addition, at least one embodiment of the present disclosure further provides a secure processor, a virtualized trusted platform module is included inside the secure processor, and the virtualized trusted platform module is uniquely bound to a virtual machine.

The secure processor is configured to receive, through a virtualized trusted platform module communication interface, an access request initiated by the virtual machine to the bound virtualized trusted platform module, and return, to the virtual machine, response data of the bound virtualized trusted platform module to the access request.

Further, the secure processor being configured to create the virtualized trusted platform module inside the secure processor and uniquely bind the virtualized trusted platform module to the virtual machine, includes the secure processor being configured to create a virtualized trusted platform module instance inside the secure processor, and allocate a resource for the virtualized trusted platform module instance; and bind the created virtualized trusted platform module instance to a virtual machine security block uniquely corresponding to the virtual machine.

Further, the secure processor being configured to create the virtualized trusted platform module instance inside the secure processor, includes the secure processor being configured to create the virtualized trusted platform module instance inside the secure processor when creating the virtual machine; and the secure processor is further configured to create the virtual machine security block uniquely corresponding to the virtual machine inside the secure processor when creating the virtual machine.

Further, the secure processor is further configured to receive a user secret sent by a terminal through a secure communication channel; and generate a key by using a built-in secure processor secret and the user secret received, in which the key is configured for encryption and decryption when virtualized trusted platform module instance data is imported into the secure processor and/or exported from the secure processor.

Further, the key and the virtualized trusted platform module instance data are stored in a nonvolatile memory of the virtualized trusted platform module.

Further, the secure processor further includes: a receiving unit, which is configured to receive the virtualized trusted platform module instance data imported by the terminal through the secure communication channel after creating the virtualized trusted platform module instance inside the secure processor and decrypt the received virtualized trusted platform module instance data by using the key; and/or an export unit, which is configured to, after creating the virtualized trusted platform module instance inside the secure processor, encrypt the received virtualized trusted platform module instance data with the key when shutting down or hibernating the virtual machine, or after restarting a host where the virtual machine is located, and export encrypted virtualized trusted platform module instance data to the terminal through the secure communication channel.

Further, the secure processor is further configured to generate an endorsement key for the virtualized trusted platform module; and sign the generated endorsement key with a built-in chip endorsement key, and generate an endorsement key certificate of the virtualized trusted platform module.

Further, the secure processor further includes a migration unit, which is configured to, after creating the virtualized trusted platform module instance inside the secure processor, encrypt, when the virtual machine is migrated, bound virtualized trusted platform module instance data, and send the bound virtualized trusted platform module instance data to a destination secure processor.

Further, the secure processor being configured to receive, through the virtualized trusted platform module communication interface, the access request initiated by the virtual machine to the bound virtualized trusted platform module, and return, to the virtual machine, response data of the bound virtualized trusted platform module to the access request, comprises the secure processor being configured to: read the access request, stored in an encrypted memory of the virtual machine, initiated by the virtual machine to the bound virtualized trusted platform module; write the response data of the bound virtualized trusted platform module to the access request into the encrypted memory of the virtual machine for the virtual machine to read; and the access request and the response data of the access request all conform to a communication interface format of the virtualized trusted platform module provided by the secure processor.

The secure processor provided by the embodiments of the present disclosure belongs to the same inventive concept as the aforementioned method for implementing a virtualized trusted platform module. For technical details not described in the secure processor, please refer to the relevant description in the aforementioned method for implementing a virtualized trusted platform module, which is not repeated here.

For example, the embodiments of the present disclosure further provide a computer-readable storage medium, which stores one or more programs, and the one or more programs are capable of being executed by one or more processors to implement the method for implementing a virtualized trusted platform module provided by any embodiment of the present disclosure.

To sum up, the embodiments of the present disclosure fill a gap in the field of vTPM, so that the vTPM has the same security as a physical TPM under the VM, and does not affect various requirements such as VM migration and hibernation in cloud scenarios.

It should be noted that in the present disclosure, relational terms such as "first," "second," etc. are only used to distinguish one entity or operation from another entity or operation, and do not necessarily require or imply the existence of any actual relationship or order between these entities or operations. Furthermore, the terms "comprise," "comprising," "include," "including," etc., or any other variant thereof are intended to cover non-exclusive inclusion, such that a process, method, article or device comprising a set of elements includes not only those elements, but also other elements not expressly listed, or other elements not expressly listed for the purpose of such a process, method, article or device, or elements that are inherent to such process, method, article or device. Without further limitation, an element defined by the phrase "includes a ..." does not preclude the existence of additional identical elements in the process, method, article or device that includes the element.

In the embodiments of the present disclosure, the term "and/or" describes the related of related objects, indicating that there may be three kinds of relationships, for example, A and/or B may indicate three cases including that A exists alone, A and B exist simultaneously, and B exists alone. The character "/" generally indicates that the related objects are in an "or" relationship.

Each embodiment in the present disclosure is described in a relevant manner, the identical and similar parts of each embodiment can be referred to between each other, and in description, each embodiment focuses on the differences with other embodiments.

In particular, for the embodiments of the apparatus, because they are basically similar to the embodiments of the method, they are described in a simpler manner, and thus the relevant parts can be referred to as corresponding parts in the description of the method embodiments.

For the purpose of convenience in description, the above apparatus is described in terms of functions divided into various units/modules. Indeed, the functions of various units/modules can be implemented in the same or more software and/or hardware when implementing the present disclosure.

Those of ordinary skill in the art may understand that the implementation of all or part of the processes in the described embodiments of the method above can be completed by the computer programs commanding relevant hardware, and the programs may be stored in a computer-readable storage medium, and the programs may include processes in the embodiments of the described method above when executed. For example, the storage medium may be a magnetic disk, a CD-ROM, a Read-Only Memory (ROM), or a Random Access Memory (RAM), and the like.

What have been described above are only specific implementations of the present disclosure, the protection scope of the present disclosure is not limited thereto. Any modifications or substitutions easily occur to those skilled in the art within the technical scope of the present disclosure should be within the protection scope of the present disclosure. Therefore, the protection scope of the present disclosure should be based on the protection scope of the claims.

## Claims

1. A method for implementing a virtualized trusted platform module, comprising:
creating the virtualized trusted platform module inside a secure processor, and uniquely binding the virtualized trusted platform module to a virtual machine (200/400);
receiving, through a virtualized trusted platform module communication interface provided by the secure processor, an access request initiated by the virtual machine to the bound virtualized trusted platform module, and returning, to the virtual machine, response data of the bound virtualized trusted platform module to the access request (201/401);
wherein creating the virtualized trusted platform module inside the secure processor, and uniquely binding the virtualized trusted platform module to the virtual machine, comprises:
creating a virtualized trusted platform module instance inside the secure processor, and allocating a resource for the virtualized trusted platform module instance; and
binding the created virtualized trusted platform module instance to a virtual machine security block uniquely corresponding to the virtual machine to uniquely bind the virtualized trusted platform module to the virtual machine, wherein the virtual machine security block is a data structure comprising information for managing and supporting an operation of the virtual machine in the secure processor, after the virtual machine is shut down or hibernated, the virtual machine security block is completely destroyed and the virtualized trusted platform module instance is destroyed;
wherein the method further comprises:
receiving a user secret sent by a terminal through a secure communication channel (402); and
generating a key by using a built-in secure processor secret and the user secret received, wherein the key is configured for encryption and decryption when virtualized trusted platform module instance data is imported into the secure processor and/or exported from the secure processor (403), the encryption and decryption are carried out inside the security processor;
encrypting the received virtualized trusted platform module instance data with the key when shutting down or hibernating the virtual machine, or after restarting a host where the virtual machine is located, and exporting encrypted virtualized trusted platform module instance data to the terminal through the secure communication channel.

2. The method according to claim 1, wherein creating the virtualized trusted platform module instance inside the secure processor comprises creating the virtualized trusted platform module instance inside the secure processor when creating the virtual machine; and
the method further comprises: creating the virtual machine security block uniquely corresponding to the virtual machine inside the secure processor when creating the virtual machine.

3. The method according to claim 2, wherein after creating the virtualized trusted platform module instance inside the secure processor, the method further comprises:
receiving the virtualized trusted platform module instance data imported by the terminal through the secure communication channel;
decrypting the received virtualized trusted platform module instance data by using the key.

4. The method according to claim 2 or 3, further comprising:
generating an endorsement key for the virtualized trusted platform module; and
signing the generated endorsement key with a chip endorsement key built in the secure processor, and generating an endorsement key certificate of the virtualized trusted platform module.

5. The method according to claim 1 or 2, wherein after creating the virtualized trusted platform module instance inside the secure processor, the method further comprises:
encrypting, when the virtual machine is migrated, bound virtualized trusted platform module instance data, and sending the bound virtualized trusted platform module instance data to a destination secure processor.

6. The method according to any one of claims 1-5, wherein receiving, through the virtualized trusted platform module communication interface provided by the secure processor, the access request initiated by the virtual machine to the bound virtualized trusted platform module, and returning, to the virtual machine, response data of the bound virtualized trusted platform module to the access request, comprises:
reading the access request, stored in an encrypted memory of the virtual machine, initiated by the virtual machine to the bound virtualized trusted platform module; and
writing the response data of the bound virtualized trusted platform module to the access request into the encrypted memory of the virtual machine for the virtual machine to read,
wherein the access request and the response data of the access request all conform to a communication interface format of the virtualized trusted platform module provided by the secure processor.

7. A secure processor, wherein a virtualized trusted platform module is comprised inside the secure processor, and the virtualized trusted platform module is uniquely bound to a virtual machine; and
the secure processor is configured to receive, through a virtualized trusted platform module communication interface, an access request initiated by the virtual machine to the bound virtualized trusted platform module, and return, to the virtual machine, response data of the bound virtualized trusted platform module to the access request;
wherein the secure processor being configured to create the virtualized trusted platform module inside the secure processor and uniquely bind the virtualized trusted platform module to the virtual machine, comprises the secure processor being configured to:
create a virtualized trusted platform module instance inside the secure processor, and allocate a resource for the virtualized trusted platform module instance; and
bind the created virtualized trusted platform module instance to a virtual machine security block uniquely corresponding to the virtual machine to uniquely bind the virtualized trusted platform module to the virtual machine, wherein the virtual machine security block is a data structure comprising information for managing and supporting an operation of the virtual machine in the secure processor, after the virtual machine is shut down or hibernated, the virtual machine security block is completely destroyed and the virtualized trusted platform module instance is destroyed;
the secure processor is further configured to:
receive a user secret sent by a terminal through a secure communication channel; and
generate a key by using a built-in secure processor secret and the user secret received, wherein the key is configured for encryption and decryption when virtualized trusted platform module instance data is imported into the secure processor and/or exported from the secure processor, the encryption and decryption are carried out inside the security processor;
wherein the secure processor further comprises an export unit, configured to, after creating the virtualized trusted platform module instance inside the secure processor, encrypt the received virtualized trusted platform module instance data with the key when shutting down or hibernating the virtual machine, or after restarting a host where the virtual machine is located, and export encrypted virtualized trusted platform module instance data to the terminal through the secure communication channel.

8. The secure processor according to claim 7, wherein the secure processor being configured to create the virtualized trusted platform module instance inside the secure processor, comprises the secure processor being configured to create the virtualized trusted platform module instance inside the secure processor when creating the virtual machine; and
the secure processor is further configured to: create the virtual machine security block uniquely corresponding to the virtual machine inside the secure processor when creating the virtual machine.

9. The secure processor according to claim 8, further comprising:
a receiving unit, configured to receive the virtualized trusted platform module instance data imported by the terminal through the secure communication channel after creating the virtualized trusted platform module instance inside the secure processor and decrypt the received virtualized trusted platform module instance data by using the key.

10. The secure processor according to claim 8 or 9, wherein the secure processor is further configured to:
generate an endorsement key for the virtualized trusted platform module; and
sign the generated endorsement key with a built-in chip endorsement key, and generate an endorsement key certificate of the virtualized trusted platform module.

11. The secure processor according to claim 7 or 8, further comprising:
a migration unit, configured to, after creating the virtualized trusted platform module instance inside the secure processor, encrypt, when the virtual machine is migrated, bound virtualized trusted platform module instance data, and send the bound virtualized trusted platform module instance data to a destination secure processor.

12. The secure processor according to any one of claims 7-11, wherein the secure processor being configured to receive, through the virtualized trusted platform module communication interface, the access request initiated by the virtual machine to the bound virtualized trusted platform module, and return, to the virtual machine, response data of the bound virtualized trusted platform module to the access request, comprises the secure processor being configured to:
read the access request, stored in an encrypted memory of the virtual machine, initiated by the virtual machine to the bound virtualized trusted platform module; and
write the response data of the bound virtualized trusted platform module to the access request into the encrypted memory of the virtual machine for the virtual machine to read,
wherein the access request and the response data of the access request all conform to a communication interface format of the virtualized trusted platform module provided by the secure processor.

13. A computer-readable storage medium, wherein the computer-readable storage medium stores one or more programs, and the one or more programs when executed by one or more processors, cause the one or more processors to implement the method according to any one of claims 1-6.

## Patentansprüche

1. Ein Verfahren zur Implementierung eines virtualisierten Trusted Platform Modules, umfassend:
das Erstellen des virtualisierten Trusted Platform Moduels innerhalb eines sicheren Prozessors und eindeutiges Binden des virtualisierten Trusted Platform Modules an eine virtuelle Maschine (200/400);
das Empfangen einer von der virtuellen Maschine initiierten Zugriffsanforderung an das gebundene virtualisierte Trusted Platform Module über eine vom sicheren Prozessor bereitgestellte Kommunikationsschnittstelle des virtualisierten Trusted Platform Modules und Zurückgeben von Antwortdaten des gebundenen virtualisierten Trusted Platform Modules auf die Zugriffsanforderung an die virtuelle Maschine (201/401);
wobei das Erstellen des virtualisierten Trusted Platform Moduls innerhalb des sicheren Prozessors und das eindeutige Binden des virtualisierten Trusted Platform Moduls an die virtuelle Maschine Folgendes umfasst: das Erstellen einer Instanz des virtualisierten Trusted Platform Moduls innerhalb des sicheren Prozessors und das Zuweisen einer Ressource an die Instanz des virtualisierten Trusted Platform Moduls; und
das Binden der erstellten Instanz des virtualisierten Trusted Platform Moduls an einen Sicherheitsblock der virtuellen Maschine, welcher der virtuellen Maschine eindeutig entspricht, um das virtualisierte Trusted Platform Modul eindeutig an die virtuelle Maschine zu binden, wobei der Sicherheitsblock der virtuellen Maschine eine Datenstruktur ist, welche Informationen zum Verwalten und Unterstützen eines Betriebs der virtuellen Maschine im sicheren Prozessor umfasst; nachdem die virtuelle Maschine heruntergefahren oder in den Ruhezustand versetzt wurde, wird der Sicherheitsblock der virtuellen Maschine vollständig zerstört und die Instanz des virtualisierten Trusted Platform Moduls wird zerstört;
wobei das Verfahren ferner umfasst:
das Empfangen eines von einem Endgerät über einen sicheren Kommunikationskanal gesendeten Benutzersecrets (402) und das Erzeugen eines Schlüssels unter Verwendung eines integrierten Secrets des sicheren Prozessors und des empfangenen Benutzersecrets, wobei der Schlüssel für die Ver- und Entschlüsselung konfiguriert ist, wenn Daten der Instanz des virtualisierten Trusted Platform Moduls in den sicheren Prozessor importiert und/oder aus dem sicheren Prozessor exportiert werden (403), wobei die Ver- und Entschlüsselung innerhalb des sicheren Prozessors durchgeführt wird;
das Verschlüsseln der empfangenen Daten der virtualisierten Trusted Platform Module-Instanz mit dem Schlüssel beim Herunterfahren oder Versetzen der virtuellen Maschine in den Ruhezustand oder nach dem Neustart eines Hosts, auf dem sich die virtuelle Maschine befindet, und Exportieren der verschlüsselten Daten der virtualisierten Trusted Platform Module-Instanz über den sicheren Kommunikationskanal an das Endgerät.

2. Das Verfahren nach Anspruch 1, wobei das Erstellen der virtualisierten Trusted-Platform-Module-Instanz innerhalb des sicheren Prozessors das Erstellen der virtualisierten Trusted-Platform-Module-Instanz innerhalb des sicheren Prozessors beim Erstellen der virtuellen Maschine umfasst; und
das Verfahren ferner umfasst: das Erstellen des der virtuellen Maschine eindeutig zugeordneten Sicherheitsblocks der virtuellen Maschine innerhalb des sicheren Prozessors beim Erstellen der virtuellen Maschine.

3. Das Verfahren nach Anspruch 2, wobei das Verfahren nach dem Erstellen der virtualisierten Trusted-Platform-Module-Instanz innerhalb des sicheren Prozessors ferner umfasst:
das Empfangen der vom Endgerät importierten Daten der virtualisierten Trusted-Platform-Module-Instanz über den sicheren Kommunikationskanal und
das Entschlüsseln der empfangenen Daten der virtualisierten Trusted-Platform-Module-Instanz unter Verwendung des Schlüssels.

4. Das Verfahren nach Anspruch 2 oder 3, ferner umfassend:
das Erzeugen eines Beglaubigungsschlüssels für das virtualisierte Trusted Platform Module; und
das Signieren des erzeugten Beglaubigungsschlüssels mit einem im sicheren Prozessor integrierten Chip-Beglaubigungsschlüssel sowie das Erzeugen eines Beglaubigungsschlüsselzertifikats für das virtualisierte Trusted Platform Module.

5. Das Verfahren nach Anspruch 1 oder 2, wobei das Verfahren nach dem Erstellen der Instanz des virtualisierten Trusted Platform Moduls innerhalb des sicheren Prozessors ferner umfasst:
das Verschlüsseln der Daten der gebundenen Instanz des virtualisierten Trusted Platform Moduls, wenn die virtuelle Maschine migriert wird, und das Senden der Daten der gebundenen Instanz des virtualisierten Trusted Platform Moduls an einen sicheren Zielprozessor.

6. Das Verfahren nach einem der Ansprüche 1 bis 5, wobei das Empfangen der von der virtuellen Maschine initiierten Zugriffsanforderung an das gebundene virtualisierte Trusted Platform Module über die vom sicheren Prozessor bereitgestellte Kommunikationsschnittstelle des virtualisierten Trusted Platform Modules und das Zurückgeben von Antwortdaten des gebundenen virtualisierten Trusted Platform Modules auf die Zugriffsanforderung an die virtuelle Maschine umfasst:
das Lesen der Zugriffsanforderung, die in einem verschlüsselten Speicher der virtuellen Maschine gespeichert ist und von der virtuellen Maschine an das gebundene virtualisierte Trusted Platform Module initiiert wurde; und
das Schreiben der Antwortdaten des gebundenen virtualisierten Trusted Platform Modules auf die Zugriffsanforderung in den verschlüsselten Speicher der virtuellen Maschine, damit die virtuelle Maschine diese lesen kann,
wobei die Zugriffsanforderung und die Antwortdaten der Zugriffsanforderung alle einem Kommunikationsschnittstellenformat des vom sicheren Prozessor bereitgestellten virtualisierten Trusted Platform Modules entsprechen.

7. Ein sicherer Prozessor, wobei ein virtualisiertes Trusted Platform Module im sicheren Prozessors enthalten ist und das virtualisierte Trusted Platform Module eindeutig an eine virtuelle Maschine gebunden ist; und
der sichere Prozessor so konfiguriert ist, dass er über eine Kommunikationsschnittstelle des virtualisierten Trusted Platform Modules eine von der virtuellen Maschine initiierte Zugriffsanforderung an das gebundene virtualisierte Trusted Platform Module empfängt und Antwortdaten des gebundenen virtualisierten Trusted Platform Modules auf die Zugriffsanforderung an die virtuelle Maschine zurücksendet;
wobei der sichere Prozessor so konfiguriert ist, dass er das virtualisierte Trusted Platform Module innerhalb des sicheren Prozessors erstellt und das virtualisierte Trusted Platform Module eindeutig an die virtuelle Maschine bindet, so dass der sichere Prozessor so konfiguriert ist, dass er:
eine Instanz des virtualisierten Trusted Platform Modules innerhalb des sicheren Prozessors erstellt und eine Ressource für die Instanz des virtualisierten Trusted Platform Modules zuweist und
die erstellte Instanz des virtualisierten Trusted Platform Modules an einen Sicherheitsblock der virtuellen Maschine bindet, welcher der virtuellen Maschine eindeutig entspricht, um das virtualisierte Trusted Platform Module eindeutig an die virtuelle Maschine zu binden, wobei der Sicherheitsblock der virtuellen Maschine eine Datenstruktur ist, die Daten zum Verwalten und Unterstützen eines Betriebs der virtuellen Maschine im sicheren Prozessor umfasst; nachdem die virtuelle Maschine heruntergefahren oder in den Ruhezustand versetzt wurde, der Sicherheitsblock der virtuellen Maschine vollständig zerstört wurde und die Instanz des virtualisierten Trusted Platform Modules zerstört wurde und
der sichere Prozessor ferner so konfiguriert ist, dass er:
ein von einem Endgerät über einen sicheren Kommunikationskanal gesendetes Benutzersecret empfängt und
unter Verwendung eines integrierten Secrets des sicheren Prozessors und des empfangenen Benutzersecrets einen Schlüssel generiert, welcher für die Ver- und Entschlüsselung konfiguriert ist, wenn Daten der virtualisierten Trusted-Platform-Module-Instanz in den sicheren Prozessor importiert und/oder aus dem sicheren Prozessor exportiert werden, wobei die Ver- und Entschlüsselung innerhalb des sicheren Prozessors durchgeführt wird;
wobei der sichere Prozessor ferner eine Exporteinheit umfasst, die so konfiguriert ist, dass sie nach dem Erstellen der virtualisierten Trusted-Platform-Module-Instanz innerhalb des sicheren Prozessors die empfangenen Daten der virtualisierten Trusted-Platform-Module-Instanz mit dem Schlüssel verschlüsselt, wenn die virtuelle Maschine heruntergefahren oder in den Ruhezustand versetzt wird oder nach dem Neustart eines Hosts, auf dem sich die virtuelle Maschine befindet, und die verschlüsselten Daten der virtualisierten Trusted-Platform-Module-Instanz über den sicheren Kommunikationskanal an das Endgerät exportiert.

8. Der sichere Prozessor nach Anspruch 7, wobei der sichere Prozessor so konfiguriert ist, dass er die virtualisierte Trusted-Platform-Module-Instanz innerhalb des sicheren Prozessors erstellt, und umfasst, dass der sichere Prozessor so konfiguriert ist, dass er die virtualisierte Trusted-Platform-Module-Instanz innerhalb des sicheren Prozessors beim Erstellen der virtuellen Maschine erstellt und
der sichere Prozessor ferner so konfiguriert ist, dass er beim Erstellen der virtuellen Maschine den Sicherheitsblock für die virtuelle Maschine erstellt, der eindeutig der virtuellen Maschine innerhalb des sicheren Prozessors zugeordnet ist.

9. Der sichere Prozessor nach Anspruch 8, ferner umfassend:
eine Empfangseinheit, die so konfiguriert ist, dass sie die vom Endgerät über den sicheren Kommunikationskanal importierten Daten der virtualisierten Trusted-Platform-Module-Instanz nach dem Erzeugen der virtualisierten Trusted-Platform-Module-Instanz innerhalb des sicheren Prozessors empfängt und die empfangenen Daten der virtualisierten Trusted-Platform-Module-Instanz unter Verwendung des Schlüssels entschlüsselt.

10. Der sichere Prozessor nach Anspruch 8 oder 9, wobei dieser ferner so konfiguriert ist, dass er:
einen Beglaubigungsschlüssel für das virtualisierte Trusted Platform Module generiert und
den generierten Beglaubigungsschlüssel mit einem integrierten Chip-Beglaubigungsschlüssel signiert und ein Beglaubigungsschlüsselzertifikat des virtualisierten Trusted Platform Modules generiert.

11. Der sichere Prozessor nach Anspruch 7 oder 8, ferner umfassend:
eine Migrationseinheit, die so konfiguriert ist, dass sie nach dem Erstellen der Instanz des virtualisierten Trusted Platform Moduls innerhalb des sicheren Prozessors, wenn die virtuelle Maschine migriert wird, gebundene Daten der Instanz des virtualisierten Trusted Platform Modules verschlüsselt und die gebundenen Daten der Instanz des virtualisierten Trusted Platform Modules an einen Ziel-Sicherheitsprozessor sendet.

12. Der sichere Prozessor nach einem der Ansprüche 7 bis 11, wobei der sichere Prozessor so konfiguriert ist, dass er über die Kommunikationsschnittstelle des virtualisierten Trusted Platform Modules die von der virtuellen Maschine initiierte Zugriffsanforderung an das gebundene virtualisierte Trusted Platform Module empfängt und Antwortdaten des gebundenen virtualisierten Trusted Platform Modules auf die Zugriffsanforderung an die virtuelle Maschine zurücksendet, wobei der sichere Prozessor so konfiguriert ist, dass er:
die in einem verschlüsselten Speicher der virtuellen Maschine gespeicherte, von der virtuellen Maschine an das gebundene virtualisierte Trusted Platform Module initiierte Zugriffsanforderung liest und
die Antwortdaten des gebundenen virtualisierten Trusted Platform Modules auf die Zugriffsanforderung hin in den verschlüsselten Speicher der virtuellen Maschine schreibt, damit die virtuelle Maschine diese lesen kann,
wobei die Zugriffsanforderung und die Antwortdaten der Zugriffsanforderung alle einem Kommunikationsschnittstellenformat des vom sicheren Prozessor bereitgestellten virtualisierten Trusted Platform Modules entsprechen.

13. Ein computerlesbares Speichermedium, welches ein oder mehrere Programme speichert und das eine oder die mehreren Programme, wenn sie von einem oder mehreren Prozessoren ausgeführt werden, bewirken, dass der eine oder die mehreren Prozessoren das Verfahren gemäß einem der Ansprüche 1 bis 6 ausführen.

## Revendications

1. Procédé de mise en œuvre d'un module de plateforme sécurisée virtualisé, comprenant :
la création du module de plateforme sécurisée virtualisé à l'intérieur d'un processeur sécurisé, et la liaison unique du module de plateforme sécurisée virtualisé à une machine virtuelle (200/400) ;
la réception, par l'intermédiaire d'une interface de communication de module de plateforme sécurisée virtualisée fournie par le processeur sécurisé, d'une demande d'accès initiée par la machine virtuelle vers le module de plateforme sécurisée virtualisée lié, et le renvoi, à la machine virtuelle, de données de réponse du module de plateforme sécurisée virtualisée lié à la demande d'accès (201/401) ;
dans lequel la création du module de plateforme sécurisée virtualisé à l'intérieur du processeur sécurisé, et la liaison unique du module de plateforme sécurisée virtualisée à la machine virtuelle, comprennent :
la création d'une instance de module de plateforme sécurisée virtualisée à l'intérieur du processeur sécurisé, et l'allocation d'une ressource pour l'instance de module de plateforme sécurisée virtualisée ; et
lier l'instance de module de plateforme sécurisée virtualisée créée à un bloc de sécurité de machine virtuelle correspondant de manière unique à la machine virtuelle afin de lier de manière unique le module de plateforme sécurisée virtualisée à la machine virtuelle, dans lequel le bloc de sécurité de machine virtuelle est une structure de données comprenant des informations pour gérer et prendre en charge un fonctionnement de la machine virtuelle dans le processeur sécurisé, après l'arrêt ou la mise en veille prolongée de la machine virtuelle, le bloc de sécurité de machine virtuelle est complètement détruit et l'instance de module de plateforme sécurisée virtualisée est détruite ;
dans lequel le procédé comprend en outre :
la réception d'un secret d'utilisateur envoyé par un terminal via un canal de communication sécurisé (402) ; et
générer une clé en utilisant un secret intégré au processeur sécurisé et le secret d'utilisateur reçu, la clé étant configurée pour le chiffrement et le déchiffrement lorsque des données d'instance du module de plateforme sécurisée virtualisée sont importées dans le processeur sécurisé et/ou exportées depuis celui-ci (403), le chiffrement et le déchiffrement étant effectués à l'intérieur du processeur sécurisé ;
le chiffrement des données d'instance de module de plateforme sécurisée virtualisée reçues à l'aide de la clé lors de l'arrêt ou de la mise en veille prolongée de la machine virtuelle, ou après le redémarrage d'un hôte sur lequel se trouve la machine virtuelle, et l'exportation des données d'instance de module de plateforme sécurisée virtualisée chiffrées vers le terminal via le canal de communication sécurisé.

2. Procédé selon la revendication 1, dans lequel la création de l'instance de module de plateforme sécurisée virtualisée à l'intérieur du processeur sécurisé comprend la création de l'instance de module de plateforme sécurisée virtualisée à l'intérieur du processeur sécurisé lors de la création de la machine virtuelle ; et
le procédé comprend en outre : la création du bloc de sécurité de la machine virtuelle correspondant de manière unique à la machine virtuelle à l'intérieur du processeur sécurisé lors de la création de la machine virtuelle.

3. Procédé selon la revendication 2, dans lequel, après la création de l'instance du module de plateforme sécurisée virtualisée à l'intérieur du processeur sécurisé, le procédé comprend en outre :
la réception des données de l'instance du module de plateforme sécurisée virtualisée importées par le terminal via le canal de communication sécurisé ;
le déchiffrement des données de l'instance du module de plateforme sécurisée virtualisée reçues à l'aide de la clé.

4. Procédé selon la revendication 2 ou 3, comprenant en outre :
générer une clé d'endossement pour le module de plateforme sécurisée virtualisé ; et
la signature de la clé d'endossement générée à l'aide d'une clé d'endossement intégrée au processeur sécurisé, et la génération d'un certificat de clé d'endossement du module de plateforme sécurisée virtualisé.

5. Procédé selon la revendication 1 ou 2, dans lequel, après avoir créé l'instance du module de plateforme sécurisée virtualisée à l'intérieur du processeur sécurisé, le procédé comprend en outre :
le chiffrement, lorsque la machine virtuelle est migrée, des données de l'instance du module de plateforme sécurisée virtualisée liée, et l'envoi des données de l'instance du module de plateforme sécurisée virtualisée liée vers un processeur sécurisé de destination.

6. Procédé selon l'une quelconque des revendications 1 à 5, dans lequel la réception, par l'intermédiaire de l'interface de communication du module de plateforme sécurisée virtualisé fournie par le processeur sécurisé, de la demande d'accès initiée par la machine virtuelle vers le module de plateforme sécurisée virtualisé liée, et le renvoi, à la machine virtuelle, des données de réponse du module de plateforme sécurisée virtualisée lié à la demande d'accès, comprennent :
la lecture de la demande d'accès, stockée dans une mémoire cryptée de la machine virtuelle, initiée par la machine virtuelle à l'intention du module de plateforme sécurisée virtualisée lié ; et
l'écriture des données de réponse du module de plateforme sécurisée virtualisée lié à la demande d'accès dans la mémoire cryptée de la machine virtuelle afin que celle-ci puisse les lire,
dans lequel la demande d'accès et les données de réponse à la demande d'accès sont toutes conformes à un format d'interface de communication du module de plateforme sécurisée virtualisée fourni par le processeur sécurisé.

7. Processeur sécurisé, dans lequel un module de plateforme sécurisée virtualisée est intégré au processeur sécurisé, et le module de plateforme sécurisée virtualisée est lié de manière unique à une machine virtuelle ; et
le processeur sécurisé est configuré pour recevoir, par l'intermédiaire d'une interface de communication du module de plateforme sécurisée virtualisée, une demande d'accès émise par la machine virtuelle à l'intention du module de plateforme sécurisée virtualisée associé, et pour renvoyer à la machine virtuelle les données de réponse du module de plateforme sécurisée virtualisée associé à cette demande d'accès ;
dans lequel le processeur sécurisé, étant configuré pour créer le module de plateforme sécurisée virtualisée à l'intérieur du processeur sécurisé et pour lier de manière unique le module de plateforme sécurisée virtualisée à la machine virtuelle, comprend le processeur sécurisé étant configuré pour :
créer une instance de module de plateforme sécurisée virtualisée à l'intérieur du processeur sécurisé, et allouer une ressource à l'instance de module de plateforme sécurisée virtualisée ; et
lier l'instance de module de plateforme sécurisée virtualisée créée à un bloc de sécurité de machine virtuelle correspondant de manière unique à la machine virtuelle afin de lier de manière unique le module de plateforme sécurisée virtualisée à la machine virtuelle, dans lequel le bloc de sécurité de machine virtuelle est une structure de données comprenant des informations pour gérer et prendre en charge un fonctionnement de la machine virtuelle dans le processeur sécurisé, après l'arrêt ou la mise en veille prolongée de la machine virtuelle, le bloc de sécurité de machine virtuelle est complètement détruit et l'instance de module de plateforme sécurisée virtualisée est détruite ;
le processeur sécurisé est en outre configuré pour :
recevoir un secret d'utilisateur envoyé par un terminal via un canal de communication sécurisé ; et
générer une clé en utilisant un secret intégré au processeur sécurisé et le secret d'utilisateur reçu, dans lequel la clé est configurée pour le chiffrement et le déchiffrement lorsque des données d'instance du module de plateforme sécurisée virtualisée sont importées dans le processeur sécurisé et/ou exportées depuis le processeur sécurisé, le chiffrement et le déchiffrement étant effectués à l'intérieur du processeur sécurisé ;
dans lequel le processeur sécurisé comprend en outre une unité d'exportation, configurée pour, après avoir créé l'instance de module de plateforme sécurisée virtualisée à l'intérieur du processeur sécurisé, chiffrer les données de l'instance de module de plateforme sécurisée virtualisée reçues à l'aide de la clé lors de l'arrêt ou de la mise en veille prolongée de la machine virtuelle, ou après le redémarrage d'un hôte sur lequel se trouve la machine virtuelle, et exporter les données chiffrées de l'instance de module de plateforme sécurisée virtualisée vers le terminal via le canal de communication sécurisé.

8. Processeur sécurisé selon la revendication 7, dans lequel le processeur sécurisé, configuré pour créer l'instance de module de plateforme sécurisée virtualisée à l'intérieur du processeur sécurisé, comprend le processeur sécurisé configuré pour créer l'instance de module de plateforme sécurisée virtualisée à l'intérieur du processeur sécurisé lors de la création de la machine virtuelle ; et
le processeur sécurisé est en outre configuré pour : créer le bloc de sécurité de la machine virtuelle correspondant de manière unique à la machine virtuelle à l'intérieur du processeur sécurisé lors de la création de la machine virtuelle.

9. Processeur sécurisé selon la revendication 8, comprenant en outre :
une unité de réception, configurée pour recevoir les données de l'instance virtualisée du module de plateforme sécurisée importées par le terminal via le canal de communication sécurisé après la création de l'instance virtualisée du module de plateforme sécurisée à l'intérieur du processeur sécurisé et pour déchiffrer les données reçues de l'instance virtualisée du module de plateforme sécurisée à l'aide de la clé.

10. Processeur sécurisé selon la revendication 8 ou 9, dans lequel le processeur sécurisé est en outre configuré pour :
générer une clé d'endossement pour le module de plateforme sécurisée virtualisé ; et
signer la clé d'endossement générée à l'aide d'une clé d'endossement intégrée à la puce, et générer un certificat de clé d'endossement du module de plateforme sécurisée virtualisé.

11. Processeur sécurisé selon la revendication 7 ou 8, comprenant en outre :
une unité de migration, configurée pour, après avoir créé l'instance du module de plateforme sécurisée virtualisée à l'intérieur du processeur sécurisé, chiffrer, lorsque la machine virtuelle est migrée, les données liées de l'instance du module de plateforme sécurisée virtualisée, et envoyer les données liées de l'instance du module de plateforme sécurisée virtualisée à un processeur sécurisé de destination.

12. Processeur sécurisé selon l'une quelconque des revendications 7 à 11, dans lequel le processeur sécurisé est configuré pour recevoir, via l'interface de communication du module de plateforme sécurisée virtualisé, la demande d'accès initiée par la machine virtuelle vers le module de plateforme sécurisée virtualisée lié, et renvoyer, à la machine virtuelle, les données de réponse du module de plateforme sécurisée virtualisée lié à la demande d'accès, le processeur sécurisé étant configuré pour :
lire la demande d'accès, stockée dans une mémoire cryptée de la machine virtuelle, initiée par la machine virtuelle à l'intention du module de plateforme sécurisée virtualisée lié ; et
écrire les données de réponse du module de plateforme sécurisée virtualisée lié à la demande d'accès dans la mémoire cryptée de la machine virtuelle afin que celle-ci puisse les lire,
dans lequel la demande d'accès et les données de réponse à la demande d'accès sont toutes conformes à un format d'interface de communication du module de plateforme sécurisée virtualisée fourni par le processeur sécurisé.

13. Support de stockage lisible par ordinateur, dans lequel le support de stockage lisible par ordinateur stocke un ou plusieurs programmes, et le ou les programmes, lorsqu'ils sont exécutés par un ou plusieurs processeurs, amènent le ou les processeurs à mettre en œuvre le procédé selon l'une quelconque des revendications 1 à 6.
